# EUROPEAN PATENT SPECIFICATION

(11) **EP 2 581 001 B1**
(45) Date of publication and mention of the grant of the patent: **09.07.2014**
(21) Application number: 11425249.7
(22) Date of filing: 12.10.2011
(51) Int. Cl.: A47J 31/00, A47J 31/36

(54) **Apparatus for preparing espresso coffee and related preparation method**
Gerät zur Zubereitungung von Espresso Kaffee und dazugehöriges Zubereitungsverfahren
Appareil pour la préparation de café espresso et methode de préparation correspondante

(43) Date of publication of application: 17.04.2013
(73) Proprietor: Gruppo Cimbali S.p.A., 20082 Binasco (MI) (IT)
(72) Inventor: Cappellini, Davide, 20082 Binasco (MI) (IT); Bottinelli, Marco, 20082 Binasco (MI) (IT)
(74) Representative: Perani, Aurelio

(56) References cited:
- EP-A1- 1 839 541
- EP-A1- 2 314 182

## Description

The present invention relates to an apparatus for preparing espresso coffee comprising a dispenser having a chamber for containing a predetermined measure of coffee grounds which are loose or contained in a breakable pod or capsule, the chamber being provided with means for introducing heated water inside it and an opening for dispensing the prepared drink, a source of water, a supply line for the water between the source and the means for introducing the water into the chamber of the dispenser, the supply line including at least one vibration pump which draws the water from the source, a device for throttling the cross-section of flow of the water, as well as a water heater which is positioned downstream of the throttling device and upstream of the dispenser.

The invention also relates to a method for carrying out the dispensing of the coffee with an apparatus of the above-indicated type.

It is known that espresso coffee is prepared by forcing water to pass through the granules of the coffee grounds at a suitable pressure and at a suitable temperature, whose values are known in the specific technological field.

The methods of applying the pressure force of the water particularly comprise a preliminary step of wetting the coffee granules which are placed in the dispenser, with the pressure of the water initially being maintained at a low value, for example, not greater than 2 bar, followed by an increase in the pressure itself to approximately from 3 to 5 bar in order then to complete the operation with the final step of extracting the drink at an optimum pressure value of approximately from 8 to 10 bar.

Technologies relating to the preparation of espresso coffee according to the above-indicated methods are described, for example, in FR-A-1300552, FR-A-2546733, EP-A0934719 and in EP-A 1555218, in that last document with particular regard to the use of prepackaged measures in pods or in capsules to be positioned inside the chamber of the dispenser.

Whereas, in the case of professional machines, control of the pressure and the state thereof during the dispensing of the espresso coffee is carried out by means of variable displacement pumps **(as for example disclosed in document** EP 2314182**)** and proportional solenoid valves, which are known to be costly devices, in the case of machines intended for use with limited production of dispensed coffee, the variable displacement pumps are replaced by vibration pumps.

Those pumps, which are known to be advantageous from the economic perspective owing to their structural simplicity, have the advantage of involving a gradual increase in the pressure of the fluid dispensed which, at the start time, is compatible with the requirement of the first wetting of the coffee granules.

However, because the pressure in the liquid dispensed by those vibration pumps increases rapidly after the start, reaching the maximum value, they require the insertion, in the line for supplying water to the dispenser, of a calibrated throttling device which is positioned immediately downstream of the pump itself.

However, it is found that the presence of the throttling device in practice brings about a drift of the final pressure on the coffee grounds, with a loss of quality of the dispensed coffee, as a result of the loss of charge determined by the ratio between the resistance of the throttling of the throttling device and that of the coffee grounds present in the dispenser chamber.

An object of the present invention is to overcome the disadvantage set out above.

That object is achieved with an apparatus according to claim 1 which is appended.

The invention will now be described in greater detail with reference to a practical embodiment thereof which is given purely by way of non-limiting example and which is illustrated in the appended drawings, in which:
Figure 1 schematically illustrates an apparatus for producing the espresso coffee incorporating the invention;
Figure 2 is a graph illustrating the state of the pressure of the water inside the chamber of the dispenser during production of espresso coffee in accordance with a first operating method;
Figure 3 is a graph illustrating the state of the pressure of the water inside the chamber of the dispenser during production of espresso coffee in accordance with a second operating method.

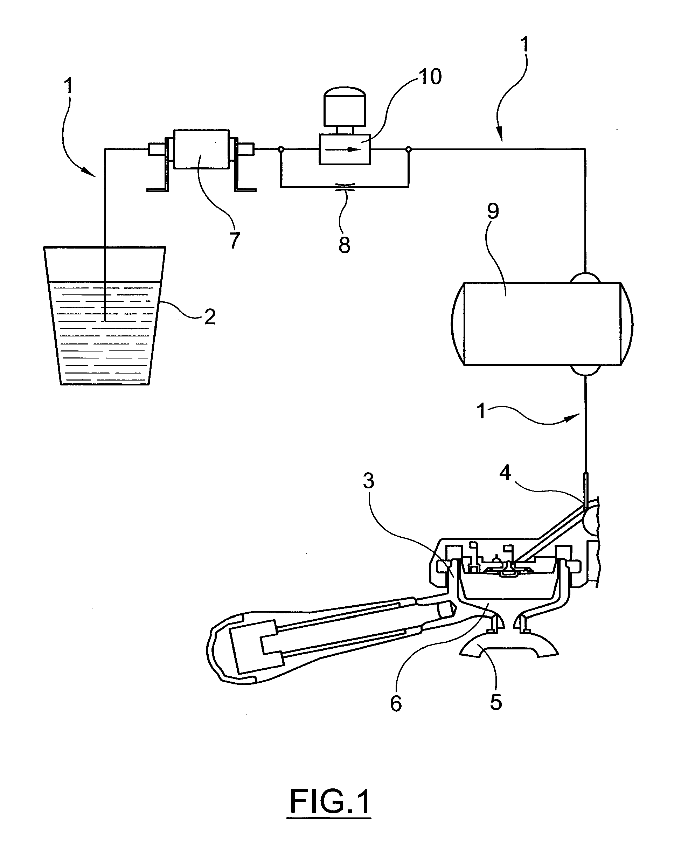

With reference to the above-mentioned Figures and in particular Figure 1, there is designated 1 a line for supplying water for the production of espresso coffee from a source of water, which is generally indicated 2 and which is directed to a conventional dispenser which has one or two measures and which is generally indicated 3.

The dispenser 3 is of the conventional type with an inlet 4 for introducing heated water inside it and at least one opening 5 for dispensing the prepared drink. A measure of coffee grounds which are loose or contained in a breakable pod or capsule can be inserted in conventional manner in the chamber 6 of the dispenser 3.

The apparatus comprises a pump 7 of the vibration type in the line 1 for supplying water.

For example, such a pump 7 may be of the type described in FR465903A1.

In the supply line 1 itself, downstream of the pump 7, there is provided a throttling device 8 and, downstream thereof but upstream of the dispenser 3, a heater 9.

In the region of the throttling device 8, in accordance with the invention, the apparatus comprises a shutoff valve 10 which preferably has electromagnetic control and which is positioned parallel with the throttling device 8.

The device 8 is preferably of the calibrated type with fixed throttling but, alternatively, may also be of the adjustable type.

With the above-described apparatus, when a request is made to dispense an espresso coffee by means of a conventional command and control unit, which is not described because it is not necessary for comprehension of the invention, after the measure of coffee or the corresponding capsule has been inserted in the chamber 6 of the dispenser 3, the preparation cycle is begun.

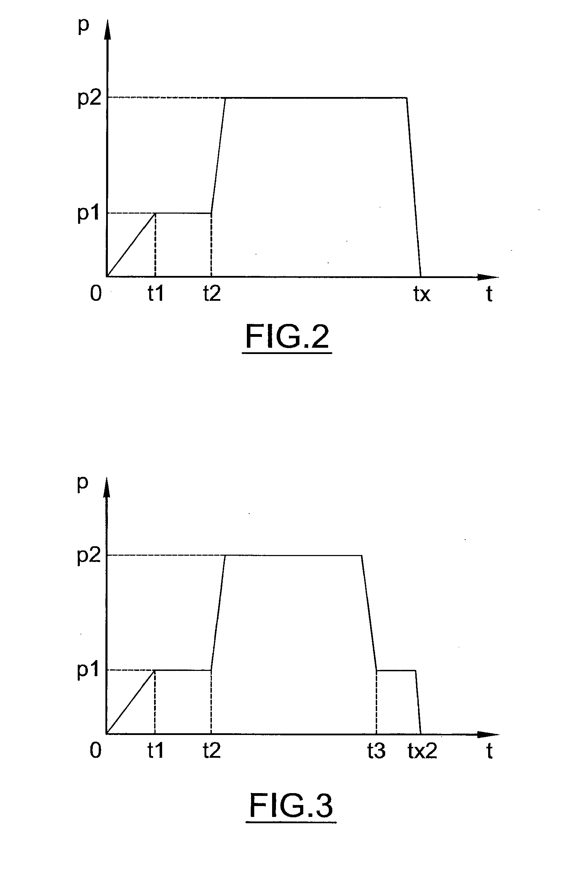

In a first embodiment thereof illustrated in the graph of Figure 2, this comprises starting the vibration pump 7 and maintaining the shutoff valve 10 in a closure position.

The pressure of the water supplied to the dispenser 3 on the time line t1 increases as far as the value p1 and is left at that value as far as time t2, at which the command is issued for opening the shutoff valve 10 which is positioned parallel with the throttling device 8.

After the valve 10 has been opened, a charge of water greater than what was allowed by the throttling device 8 reaches the dispenser 3 and consequently the pressure in the chamber 6 of the dispenser 3 can increase as far as the maximum value p2.

This condition can be maintained until the time tx is reached for the dispensing cycle end which depends on the quantity of drink desired in cups.

The state of the pressure of the water inside the dispensing chamber according to the graph of Figure 2 is found to be particularly suitable for increasing the quality of the socalled "creamy coffees" for which mixtures mainly constituted by coffee beans of the "Arabica" variety are used. Alternatively, as will be appreciated from the graph of Figure 3, the method for dispensing the coffee may include a step in which the shutoff valve 10, when time t3 is reached, is closed and the supply of water to the dispenser 3 returns to being what is allowed by the throttling device 8 alone, with the pressure in the dispenser being decreased to the value p1 again.

That subsequent operating cycle step may terminate at time tx2 and allows specific dispensing actions for Italian style espresso coffee produced with mixtures characterized by a content of the "Arabica" variety of between 30% and 70%, when it is desired to limit an excessively bitter and/or astringent taste which those mixtures determine.

The dimensions and materials could be selected as desired in accordance with requirements without for all that departing from the scope of protection of the invention as claimed below.

## Claims

1. An apparatus for preparing espresso coffee comprising a dispenser (3) having a chamber (6) for containing a predetermined measure of coffee grounds which are loose or contained in a breakable pod or capsule, the dispenser being provided with an inlet (4) for introducing heated water into the chamber (6) thereof and an opening (5) for dispensing the prepared drink, a source (2) of water, a supply line (1) for the water between the source (2) and the inlet (4) for introducing the water into the chamber (6) of the dispenser (3), **a water heater (9) positioned upstream of the dispenser (3), characterised in that** the supply line (1) **comprises** at least one vibration pump (7) which draws the water from the source (2), a device (8) for throttling the cross-section of flow of the water positioned **upstream of the water heater (9),** a shutoff valve (10) which is positioned parallel with the throttling device (8).

2. An apparatus according to claim 1, **characterized in that** the shutoff valve (10) positioned parallel with the throttling device (8) is a valve with electromagnetic control.

3. An apparatus according to claims 1 and 2, **characterized in that** the throttling device (8) is adjustable.

4. A method for preparing espresso coffee with a coffee machine **characterised by providing an apparatus according to claim 1 wherein** during the coffee preparation cycle, there is actuated an initial step which has a predetermined length and in which the water is supplied to the dispenser (3) only through the throttling device (8), with the shutoff valve (10) being maintained in a closure position, followed by at least a second step in which the shutoff valve (10) is maintained open and the supply water flows both through the throttling device (8) and through the shutoff valve (10).

5. A method according to claim 4, **characterized in that** the length of the initial step for supplying the water to the dispenser (3) through the throttling device (8) alone corresponds to the time necessary for wetting the measure of coffee contained in the dispenser (3).

6. A method according to claims 4 and 5, **characterized in that**, during the second step, the shutoff valve (10) is maintained open until the end of the coffee dispensing cycle.

7. A method according to claims 4 and 5, **characterized in that** the second step of supplying the water to the dispenser (3) with the shutoff valve (10) open is followed by a subsequent step in which the shutoff valve (10) is closed, the subsequent step terminating at the end of the cycle for dispensing the measure of coffee.

## Patentansprüche

1. Vorrichtung zum Zubereiten eines Espressokaffees, die eine Abgabevorrichtung (3) mit einer Kammer (6) zum Enthalten einer vorbestimmten Menge an Kaffeemehlen, die lose oder in einer brechbaren Hülse oder Kapsel enthalten sind, wobei die Abgabevorrichtung mit einem Einlass (4) zum Einleiten von erhitztem Wasser in die Kammer (6) derselben und einer Öffnung (5) zum Ausgeben des zubereiteten Getränks versehen ist, eine Wasserquelle (2), eine Versorgungsleitung (1) für das Wasser zwischen der Quelle (2) und dem Einlass (4) zum Einleiten des Wassers in die Kammer (6) der Abgabevorrichtung (3), und einen Wassererhitzer (9) umfasst, der stromaufwärts der Abgabevorrichtung (3) angeordnet ist, **dadurch gekennzeichnet, dass** die Versorgungsleitung (1) mindestens eine Schwingankerpumpe (7), die das Wasser aus der Quelle (2) ansaugt, eine Vorrichtung (8) zum Drosseln des Querschnitts des Wasserflusses, die stromaufwärts des Wassererhitzers (9) angeordnet ist, und ein Absperrventil (10) umfasst, das parallel zur Drosselvorrichtung (8) angeordnet ist.

2. Vorrichtung nach Anspruch 1, **dadurch gekennzeichnet, dass** das parallel zur Drosselvorrichtung (8) angeordnete Absperrventil (10) ein Ventil mit einer elektromagnetischen Steuerung ist.

3. Vorrichtung nach Anspruch 1 und 2, **dadurch gekennzeichnet, dass** die Drosselvorrichtung (8) einstellbar ist.

4. Verfahren zum Zubereiten von Espressokaffee mit einer Kaffeemaschine, das durch das Bereitstellen einer Vorrichtung nach Anspruch 1 gekennzeichnet ist, wobei während des Kaffeezubereitungszyklus ein Anfangsschritt ausgeführt wird, der eine vorbestimmte Länge hat und bei dem das Wasser der Abgabevorrichtung (3) nur durch die Drosselvorrichtung (8) zugeführt wird, wobei das Absperrventil (10) in einer Schließstellung gehalten wird, gefolgt von mindestens einem zweiten Schritt, bei dem das Absperrventil (10) offen gehalten wird und das Speisewasser sowohl durch die Drosselvorrichtung (8) als auch durch das Absperrventil (10) fließt.

5. Verfahren nach Anspruch 4, **dadurch gekennzeichnet, dass** die Länge des Anfangsschritts für die Zuführung des Wassers zur Abgabevorrichtung (3) durch nur die Drosselvorrichtung (8) der Zeit entspricht, die zum Benetzen der in der Abgabevorrichtung (3) enthaltenen Kaffeemenge erforderlich ist.

6. Verfahren nach den Ansprüchen 4 und 5, **dadurch gekennzeichnet, dass** das Absperrventil (10) während des zweiten Schritts bis zum Ende des Kaffeeabgabezyklus offen gehalten wird.

7. Verfahren nach den Ansprüchen 4 und 5, **dadurch gekennzeichnet, dass** auf den zweiten Schritt des Zuführens des Wassers zur Abgabevorrichtung (3) mit geöffnetem Absperrventil (10) ein anschließender Schritt folgt, bei dem das Absperrventil (10) geschlossen ist, wobei der anschließende Schritt am Ende des Zyklus für die Abgabe der Kaffeemenge endet.

## Revendications

1. Dispositif de préparation de café expresso comprenant un distributeur (3) comportant une chambre (6) pour contenir une dose prédéterminée de café moulu qui est en vrac ou contenu dans une dosette ou capsule cassable, le distributeur étant pourvu d'une entrée (4) pour introduire de l'eau chauffée dans sa chambre (6) et d'une ouverture (5) pour distribuer la boisson préparée, une source d'eau (2), une ligne d'alimentation (1) pour l'eau entre la source (2) et l'entrée (4) pour introduire l'eau dans la chambre (6) du distributeur (3), un réchauffeur d'eau (9) positionné en amont du distributeur (3), **caractérisé en ce que** la ligne d'alimentation (1) comprend au moins une pompe à vibration (7) qui soutire l'eau à partir de la source (2), un dispositif (8) pour étrangler la section transversale d'écoulement de l'eau, positionnée en amont du réchauffeur d'eau (9), une vanne d'arrêt (10) qui est positionnée en parallèle avec le dispositif d'étranglement (8).

2. Dispositif selon la revendication 1, **caractérisé en ce que** la vanne d'arrêt (10) positionnée en parallèle avec le dispositif d'étranglement (8) est une vanne avec commande électromagnétique.

3. Dispositif selon les revendications 1 et 2, **caractérisé en ce que** le dispositif d'étranglement (8) est réglable.

4. Procédé de préparation de café expresso avec une machine à café, **caractérisé par** la disposition d'un dispositif selon la revendication 1, dans lequel, durant le cycle de préparation de café, il est exécuté une étape initiale qui à une longueur prédéterminée et dans laquelle l'eau est délivrée au distributeur (3) seulement à travers le dispositif d'étranglement (8), avec la vanne d'arrêt (10) qui est maintenue dans une position de fermeture, suivie par au moins une deuxième étape dans laquelle la vanne d'arrêt (10) est maintenue ouverte et l'eau d'alimentation s'écoule à la fois à travers le dispositif d'étranglement (8) et à travers la vanne d'arrêt (10).

5. Procédé selon la revendication 4, **caractérisé en ce que** la longueur de l'étape initiale pour délivrer l'eau au distributeur (3) seulement à travers le dispositif d'étranglement (8) correspond au temps nécessaire pour mouiller la dose de café contenue dans le distributeur (3).

6. Procédé selon les revendications 4 et 5, **caractérisé en ce que**, durant la deuxième étape, la vanne d'arrêt (10) est maintenue ouverte jusqu'à la fin du cycle de distribution de café.

7. Procédé selon les revendications 4 et 5, **caractérisé en ce que** la deuxième étape de fourniture de l'eau au distributeur (3) avec la vanne d'arrêt (10) ouverte est suivie par une étape successive dans laquelle la vanne d'arrêt (10) est fermée, l'étape successive se terminant à la fin du cycle pour la distribution de la dose de café.
